# EUROPÄISCHE PATENTSCHRIFT

(11) **EP 3 212 350 B1**
(45) Veröffentlichungstag und Bekanntmachung des Hinweises auf die Patenterteilung: **21.09.2022**
(21) Anmeldenummer: 15766885.6
(22) Anmeldetag: 23.09.2015
(51) Int. Cl.: B22C 9/06, B22C 9/08, B22D 17/22

(54) **GIESSWERKZEUG MIT ZUMINDEST EINER KAVITÄT ZUR HERSTELLUNG ZUMINDEST EINES GUSSTEILES**
CASTING MOLD COMPRISING AT LEAST ONE CAVITY FOR MANUFACTURING AT LEAST ONE CAST ARTICLE
MOULE DE FONDERIE POURVU D'AU MOINS UNE EMPREINTE ET DESTINÉ À LA FABRICATION D'UNE PIÈCE DE FONDERIE

(30) Priorität: 27.10.2014 DE 102014221852
(43) Veröffentlichungstag der Anmeldung: 06.09.2017
(73) Patentinhaber: Volkswagen Aktiengesellschaft, 38440 Wolfsburg (DE)
(72) Erfinder: BEGANOVIC, Thomas, 29225 Celle (DE); DEMMER, Carsten, 38116 Braunschweig (DE); GIERTH, Sebastian, 01904 Ringenhain (DE); KUCHARSKI, Rafael, 30419 Hannover (DE); FINDEISEN, Sebastian, 38102 Braunschweig (DE); KNORR, Stephan, 38112 Braunschweig (DE)
(86) Internationale Anmeldenummer: PCT/EP2015/071914
(87) Internationale Veröffentlichungsnummer: WO 2016/066339

(56) Entgegenhaltungen:
- EP-A1- 0 106 203
- EP-A1- 0 554 682
- DE-A1-102007 038 958
- US-A- 3 345 738
- US-A- 4 250 950
- US-A- 4 705 095
- US-A1- 2009 145 567
- US-A1- 2013 333 855
- US-B1- 6 588 484
- MEISSNER K ET AL: "Verfahren zur Markierung von Gussteilen während des Urformprozesses", GIESSEREI,, Bd. 96, Nr. 6, 2. Juni 2009 (2009-06-02), Seiten 52-61, XP001555806, ISSN: 0016-9765

## Beschreibung

Die Erfindung betrifft ein Gießwerkzeug mit zumindest einer Kavität zur Herstellung zumindest eines Gussteiles. Hierbei weist eine die Kavität begrenzende Gießfläche des Gießwerkzeuges zumindest abschnittsweise eine Oberflächenstrukturierung auf.

Die EP 0 106 203 A1 offenbart in diesem Sinne bereits ein dünnwandiges Gussteil mit rippenförmigen Erhebungen bzw. Erweiterungen, wobei die Erhebungen bzw. Erweiterungen zusammenhängende Verbindungsrippen bilden und eine Anzahl von Füllflächen begrenzen. Beim Gießen fließt die Schmelze durch die geraden, senkrecht und horizontal verlaufenden Rippen aus vier Richtungen in die Füllflächen, sodass diese schnell aufgefüllt werden. Auf diese Weise kann ein Kaltschweißen wirksam verhindert werden. Die Verbindungsrippen sind dabei insbesondere im Bereich dünner Wandungen angeordnet und in diesen Bereichen gleichverteilt ausgeführt, sodass die Anordnung unabhängig von einer während des Gießens vorliegenden Fließrichtung der Schmelze ist. Die Verwendung dieser Gussteile ist in der Automobilindustrie für Gehäuse und Räder geeignet.

In der US 2013 / 0 333 855 A1 ist darüber hinaus ein Werkzeug zur Herstellung einer Feingussform offenbart. Die beschriebene Oberflächenstrukturierung dient der Verklammerung zwischen der Form und dem eingebrachten Gussmaterial (Schlicker) und erhöht die Schlickerschichtdicke durch eine bessere Benetzung des Wachsmodells. Hierbei ist die Oberflächenstrukturierung gar über die gesamte Oberfläche der Feingussform gleichverteilt ausgeführt und entsprechend von einer Strömungsrichtung des eingebrachten Gussmateriales unabhängig ausgeführt.

Die US 4 705 095 A, die US 2009 / 0 145 567 A1 und die US 3 345 738 A zeigen jeweils eine Vorrichtung zum Bandgießen eines Halbzeuges, hierbei insbesondere von Blechhalbzeugen. Das Gussmaterial wird hierfür auf eine Walze aufgebracht, welche eine Oberflächenstrukturierung aufweist, wobei durch die Oberflächenstrukturierung die Haftung zwischen der Walze und dem Gussmaterial verbessert wird. Auch in diesem Fall sind die Oberflächenstrukturierungen vollflächig und von einer Richtung der Strömung des Gussmateriales unabhängig ausgeführt.

Die US 4 250 950 A offenbart überdies ein Gießwerkzeug zum Stranggießen von Aluminium. Hierbei werden kontinuierlich Halbzeuge in Form von Barren, sogenannten Masseln, zur weiteren Verwendung hergestellt. Das Gießwerkzeug weist eine über die gesamte Oberfläche des Gießwerkzeuges ausgeführte Oberflächenstrukturierung auf, um die Oberflächenqualität der Halbzeuge zu verbessern und um Kaltlauf und Ausschwitzungen zu vermeiden. Durch die Oberflächenstrukturierung werden freiwerdende Gase abgeleitet, diese ist somit im Wesentlichen nicht in Abhängigkeit einer das Gießwerkzeug durchströmenden Schmelze eingerichtet.

In der EP 0 544 682 A1 wird ein im Sandguss einsetzbares Gießwerkzeug mit einem als Siliziumgrundkörper ausgebildeten Einsatz offenbart. Lediglich der zur Verschleißreduzierung vorgesehene Einsatz weist hierbei eine Oberflächenstrukturierung auf, welche über die gesamte Oberfläche des Einsatzes ausgebildet ist und mittels welcher die Reibung zwischen dem Einsatz und dem Gießwerkzeug erhöht wird, um ein Verrutschen zu verhindern. Somit ist auch hier keine Abhängigkeit der Oberflächenstrukturierung von der Strömung einer Metallschmelze gegeben.

Die DE 10 2007 038 958 A1 betrifft ein Verfahren bzw. ein Werkzeug zur Herstellung von Implantaten für eine zahnmedizinische Anwendung. Die hier offenbarte Oberflächenstrukturierung dient der verbesserten Haftung zwischen Gewebe und Implantat.

In der US 6 588 484 B1 ist weiterhin ein Werkzeug zur Herstellung eines Keramikkerns offenbart. Das Werkzeug weist dabei eine Oberflächenstrukturierung auf, welche über die gesamte Oberfläche des Werkzeuges ausgeführt ist und sich darüber hinaus auf dem Keramikkern abbildet. Die auf dem Kern angeordnete Strukturierung bildet dabei eine Oberflächenvergrößerung und dient der Kühlung des mittels des Kernes herstellbaren Gussteiles.

Die Druckschrift Meisner, K. et al.: "Verfahren zur Markierung von Gussteilen während des Umformprozesses", Gießerei, Bd. 96, Nr. 6, 2. Juni 2009 offenbart ein Verfahren bzw. ein Werkzeug zum Einbringen einer Struktur auf einem Gussteil. Mittels der Struktur werden die Gussteile für eine Teilerückverfolgung markiert. Die Struktur wird durch variable Schieber im Bereich der Gießfläche der Schieber erzeugt.

Aus der EP 1 663 567 B1 ist ferner ein Verfahren zur Erzeugung einer Textur auf einer beliebig gekrümmten Oberfläche mittels eines Laserstrahles bekannt. Die Texturen werden dabei in Flächenabschnitte unterteilt auf die Oberfläche aufgebracht.

In der Serienproduktion von Leichtbau-Fahrwerkteilen aus Aluminium-Legierungen sind derzeit, insbesondere bei größeren Fließwegen der Aluminiumschmelze, ausschließlich Gussteile mit Wandstärken oberhalb 5 mm realisierbar. Dieses resultiert aus der Oberflächenspannung der Metallschmelze und der sich bildenden Oxidhaut auf der Schmelzefront, insbesondere bei längeren Fließwegen. Dadurch weisen Teilbereiche des Fahrwerkteiles ausschließlich aus gießtechnischen Gründen größere Wanddicken auf als unbedingt erforderlich. Hieraus resultiert ein erhöhter Materialeinsatz in Verbindung mit einem hohen Gewicht, was insbesondere im Hinblick auf den Leichtbau sehr nachteilig ist. Zur Optimierung von Fließwegen und -geschwindigkeiten wird auf die Gießflächen ein als Oberflächenschlichte bekannter Überzug aufgetragen, welcher die glatte Oberfläche des Gießwerkzeuges aufraut.

Vor diesem Hintergrund liegt der Erfindung die Aufgabe zugrunde, ein Gießwerkzeug mit einer Kavität zur Verfügung zu stellen, mittels welchem auch bei langen Fließwegen der Metallschmelze Gussteile mit geringeren Wanddicken herstellbar sind.

Diese Aufgabe wird gelöst mit einem Gießwerkzeug gemäß den Merkmalen des Patentanspruches 1 beziehungsweise 9 . Die Unteransprüche betreffen besonders zweckmäßige Weiterbildungen der Erfindung.

Erfindungsgemäß ist also ein Gießwerkzeug mit zumindest einer Kavität zur Herstellung zumindest eines Gussteiles vorgesehen, bei welchem eine die Kavität begrenzende Gießfläche des Gießwerkzeuges zumindest abschnittsweise eine Oberflächenstrukturierung aufweist, welche aus mehreren Elementarzellen besteht, wobei jede Elementarzelle eine gegenüber der Gießfläche vorspringende und/oder zurückversetzte Struktur aufweist, die innerhalb der jeweiligen Elementarzelle endet. Dadurch, dass die vorspringenden und/oder zurückversetzten Strukturen innerhalb der Elementarzelle enden, ist jede Struktur vollständig von einem Steg der Gießfläche umgeben, sodass eine Oberflächenstrukturierung mit einer gegenüber der aus dem eingangs genannten Stand der Technik bekannten Gitterstruktur definierten Rauigkeit zur Verfügung gestellt werden kann. Durch diese gezielte Rauigkeit der Oberflächenstrukturierung wird die Kontaktfläche zwischen der Metallschmelze und der Gießfläche minimiert. Die lokale Geschwindigkeit der Metallschmelze wird durch die Oberflächenstrukturierung basierend auf lokalen turbulenten Strömungen erhöht. Die Oxidhaut auf der Schmelze wird zunehmend zerrissen.

An der Grenzzone von strukturierter Oberfläche von Kokille und Metallschmelze entsteht aufgrund eines unterschiedlichen Benetzungsverhaltens eine Luftschicht bzw. ein Luftpolster, welches eine isolierende Wirkung aufweist. Hierdurch wird verhindert, dass die thermische Energie der Metallschmelze durch den direkten Kontakt mit der Oberflächenstrukturierung des Gießwerkzeuges reduziert wird. Damit strömt die Metallschmelze weiter als diejenige, welchen direkten Kontakt zu einer unstrukturierten Gießfläche hat.

Zusammenfassend ergibt sich, dass durch die vorspringenden oder zurückversetzten Strukturen eine Oberflächenstrukturierung geschaffen wird, welche die sich während der Fließbewegung der Schmelzefront bildende Oxidhaut aufbricht. Außerdem wird die Oberflächenspannung der Schmelzefront gezielt reduziert.. Hierdurch ist es möglich, die Fließlänge der Schmelze bei gleicher Wanddicke des Gussteiles zu vergrößern bzw. die Wanddicke des Gussteiles bei gleicher Fließlänge zu verkleinern. Selbstverständlich ist auch eine Kombination der Vergrößerung der Fließlänge und der Verkleinerung der Wanddicke möglich. Hieraus resultierend ergibt sich eine Reduzierung der benötigten Schmelze und das hergestellte Gussteil kann auch geringere Wandstärken von unter 5 mm aufweisen. Dadurch wird das Gesamtgewicht des Gussteiles reduziert und im Hinblick auf den Leichtbau optimiert. Die Eigenschaften des hergestellten Gussteiles werden durch die in das Gießwerkzeug eingebrachte Oberflächenstrukturierung nicht negativ beeinflusst. Die Oberflächenstrukturierungen können in den Gießwerkzeugen zur Herstellung von Gussteilen aus Leichtmetall, vorzugsweise aus Aluminium, insbesondere beim Schwerkraftguss, Kippguss, CPC-Guss (Gegendruck-Guss), Niederdruck-Guss und Druckguss eingesetzt werden.

Die Ausgestaltung des Gießwerkzeuges sieht vor, dass die Elementarzellen der Oberflächenstrukturierung ein Muster mit identisch ausgebildeten Strukturen bilden. Dadurch, dass die Oberflächenstrukturierung ein Muster mit identischen Strukturen bildet, wird insbesondere der Herstellungsaufwand zum Einbringen der Oberflächenstrukturierung in die Gießfläche des Gießwerkzeuges minimiert. Außerdem wirken hierdurch im gesamten Bereich der Oberflächenstrukturierung die gleichen Effekte auf die Metallschmelze und die Schmelzefront. Selbstverständlich ist es auch möglich, dass die Oberflächenstrukturierung ein Muster auch unterschiedlicher Strukturen bildet. Hierbei ist der Herstellungsaufwand zwar größer, jedoch können abhängig von der Komplexität des Gussteiles in einzelnen Bereichen unterschiedliche Effekte erzielt werden.

Weiterhin ist vorgesehen, dass alle Elementarzellen der Oberflächenstrukturierung die gleiche Größe und/oder Form aufweisen. Allerdings ist es ebenfalls denkbar, dass die Elementarzellen unterschiedliche Formen oder Größen aufweisen, insbesondere wenn in bestimmten Bereichen des Gießwerkzeuges andere Effekte erreicht werden sollen. Auch kann es zweckmäßig sein, dass sich zwei oder mehrere Elementarzellen der Oberflächenstrukturierung zumindest teilweise überlappen. Hierdurch kann ein Abstand der Strukturen von benachbarten Elementarzellen in Abhängigkeit der Gussteilstruktur bzw. der Komplexität der Kavität des Gießwerkzeuges variiert werden, um bestimmte Effekte zu erreichen oder zu verstärken.

Die Erfindung sieht vor, dass die Struktur bereichsweise sphärisch ausgebildet ist. Durch die sphärisch, insbesondere halbkugelförmig ausgebildete Vertiefung in den jeweiligen Elementarzellen ergibt sich eine Oberflächenstrukturierung ähnlich einer Golfballstruktur. Durch den sogenannten Golfballeffekt wird der Reibungswiderstand durch die Gießfläche selbst durch eine Reduzierung der Kontaktfläche gemindert und die Strömungsgeschwindigkeit der Metallschmelze und dadurch auch die Fließlänge der Metallschmelze werden vergrößert. Eine derartige Struktur wird auch als ungerichtete Struktur bezeichnet und wird überall dort eingesetzt, wo vorzugsweise eine langsame, hinsichtlich der Richtung undefinierte Strömung der Metallschmelze zu erwarten ist.

Erfindungsgemäß ist weiterhin vorgesehen, dass die Struktur zumindest eine Erhebung oder Vertiefung aufweist, welche sich in Fließrichtung einer Metallschmelze in der Kavität erstreckt. Derartige richtungsgebundene Strukturen werden insbesondere an den Stellen des Gießwerkzeuges eingesetzt, an welchen eine vorzugsweise schnelle und stark gerichtete Strömung zu erwarten ist. Die in Fließrichtung ausgerichteten langgestreckten Strukturen behindern die Querbewegung der Wirbel in der turbulenten Strömung auf der Oberfläche der Gießfläche. Auf diese Weise wird die Wandreibung um ca. 10 % reduziert. Durch diese Widerstandsverminderung ergibt sich eine Vergrößerung der Fließlänge der Metallschmelze von ca. 50 %.

Die Effekte der eingebrachten Strukturen können dadurch beeinflusst oder verstärkt und an die jeweiligen Randbedingungen angepasst werden, dass die zumindest eine Erhebung oder Vertiefung unterschiedliche Breiten und/oder unterschiedliche Höhen oder Tiefen aufweist. Eine einzige Vertiefung kann in Richtung ihrer Längserstreckung also Abschnitte aufweisen, deren Abmessungen sich von den jeweils benachbarten Abschnitten derselben Vertiefung unterscheiden. Dabei kann der Übergang zwischen den jeweils benachbarten Abschnitten in Stufen oder stufenlos erfolgen.

Es hat sich als besonders praxisnah erwiesen, dass die Strukturen vorzugsweise aus zwei oder mehreren Erhebungen und/oder Vertiefungen besteht. Diese können in Abhängigkeit des Einsatzfalles aus nicht miteinander verbundenen Erhebungen und/oder Vertiefungen oder aber auch aus einer zusammenhängenden Struktur bestehen.

In diesem Fall können die Erhebungen und/oder Vertiefungen der Struktur parallel zueinander angeordnet sein oder aber einen spitzen Winkel zwischen sich einschließen. Selbstverständlich können auch die zumindest zwei oder mehreren Erhebungen und/oder Vertiefungen einer Struktur untereinander unterschiedliche Längen und/oder unterschiedliche Breiten und/oder unterschiedliche Höhen und/oder unterschiedliche Tiefen aufweisen. Auch können die Abstände der Vertiefungen oder Erhebungen untereinander an den jeweiligen Einsatzfall angepasst werden.

Weiterhin hat es sich in der Praxis als besonders vorteilhaft erwiesen, dass die Struktur eine bionische Struktur ist. Dabei kann die Struktur beispielsweise ähnlich den Schuppen einer Haifischhaut ausgebildet sein. Die Schuppen weisen dabei diverse in Fließrichtung der Metallschmelze gerichtete Rippen mit einer scharfen Rippenspitze auf. Die Rippen weisen unterschiedliche Längen, Tiefen und Breiten auf. Weiterhin kann die Struktur nach Art eines Krähenfußes oder als Bambusstruktur ausgebildet sein.

Erfindungsgemäß ist außerdem ein Gießwerkzeug mit einer Kavität zur Herstellung eines Gussteiles vorgesehen, bei welchem eine die Kavität begrenzende Gießfläche des Gießwerkzeuges zumindest abschnittsweise eine Oberflächenstrukturierung aufweist, welche aus mehreren Elementarzellen besteht, wobei jede Elementarzelle eine gegenüber der Gießfläche vorspringende oder zurückversetzte Struktur aufweist, wobei die Strukturen in jeweils benachbarten Elementarzellen zusammenhängend ausgebildet sind und ein Muster aus orthogonalen Erhebungen oder Vertiefungen bilden, wobei ein Verhältnis zwischen der Gießfläche und einer vorspringenden oder zurückversetzten Strukturfläche innerhalb einer Elementarzelle weniger als 2:1 beträgt. Dadurch, dass mehr als ein Drittel der Elementarzelle aus Vertiefungen oder Erhebungen besteht, stellen sich ähnliche Effekte ein wie bei den Strukturen, die innerhalb der Elementarzellen enden. Durch die Orthogonalität der Erhebungen oder Vertiefungen lassen sich diese besonders schnell und einfach in die Gießfläche des Gießwerkzeuges einbringen.

Hierbei hat es sich als vorteilhaft erwiesen, dass eine Höhe und/oder Tiefe der Erhebungen oder Vertiefungen dem halben Abstand zwischen zwei parallelen Erhebungen und/oder parallelen Vertiefungen in benachbarten Elementarzellen entspricht und dass die Erhebungen oder Vertiefungen einen halbkreisförmigen oder v-förmigen Querschnitt aufweisen.

Eine weitere Vereinfachung der Herstellung der Oberflächenstrukturierung wird auch dadurch geschaffen, dass die orthogonalen Erhebungen oder Vertiefungen des Musters der Oberflächenstrukturierung eine konstante Höhe oder Tiefe aufweisen.

Bei einfachen Strukturen innerhalb der Elementarzellen erweist es sich als zweckmäßig, dass die Oberflächenstrukturierung bzw. die Struktur in den jeweiligen Elementarzellen durch ein spanendes Fertigungsverfahren hergestellt ist. Beispielhaft sei hier die Herstellung von bahnförmigen Strukturen durch einen Kugelfräser genannt. Durch ein spanendes Verfahren wird eine thermische Beeinflussung des Gießwerkzeuggefüges während des Einbringens der Struktur ausgeschlossen. Je nach Ausgestaltung der Oberflächenstrukturierung kann diese auch durch ein umformendes Fertigungsverfahren, insbesondere durch Druckumformen bzw. Einprägen, hergestellt werden.

Bei komplexen Strukturen erweist es sich dagegen als sinnvoll, dass die Oberflächenstrukturierung durch ein abtragendes Fertigungsverfahren hergestellt ist. Hierbei wird die Struktur beispielsweise durch einen Laser in die Gießfläche des Gießwerkzeuges eingebracht. Als komplexe Struktur sei hier bespielhaft die Herstellung der Riblets der Haifischstruktur genannt.

Eine besonders vorteilhafte Ausgestaltung des Gießwerkzeuges wird auch dadurch geschaffen, dass an der Gießfläche des Gießwerkzeuges zumindest zwei Oberflächenstrukturierungen angeordnet sind, welche das gleiche Muster oder voneinander abweichende Muster aufweisen. Je nach ortsabhängigem Strömungsverhältnis werden für ein herzustellendes Gussteil unterschiedliche Muster mit unterschiedlichen Strukturen in den entsprechenden Bereichen des Gießwerkzeuges eingesetzt. Beispielsweise ist in Bereichen mit schneller, stark gerichteter Strömung eine unidirektionale Struktur vorteilhafter, bei welcher die jeweilige Struktur im Wesentlichen in Strömungsrichtung der Metallschmelze ausgerichtet ist. In langsam, mit eher undefinierter Strömungsrichtung durchströmten Bereichen sind dagegen die ungerichteten Strukturen von Vorteil. Diese sind auch bei Strömungsrichtungswechseln während der Formfüllung zu bevorzugen. Die Oberflächenstrukturierungen werden also in unterschiedlichen Bereichen des Gießwerkzeuges so ausgewählt, dass sie die lokal den besten Effekt erzielen.

Hierbei können die Strömungsgeschwindigkeit und auch die Strömungsrichtung bzw. Fließrichtung in dem Gießwerkzeug im Vorfeld durch eine Gießsimulation exakt vorhergesagt werden. Diese Information kann dann dazu verwendet werden, um (ggf. automatisiert) die optimale Richtung der Strukturen auf der Gießoberfläche zu bestimmen. Dazu ist es notwendig, ein Parameterfeld (Geschwindigkeit und Richtung) in der Simulation zu hinterlegen. Diese Vorgehensweise ist erforderlich, um die Effekte von unidirektionalen Strukturen vollständig nutzbar zu machen.

Weiterhin betrifft die Erfindung ein in einem vorab beschriebenen Gießwerkzeug hergestelltes Gussstück. Dabei weist das Gussstück die Negativkontur der in dem Gießwerkzeug angeordneten Oberflächenstrukturierung auf.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig. 1: ein erfindungsgemäßes Gussteil in einer perspektivischen Darstellung;
- Fig. 2: eine Prinzipskizze eines erfindungsgemäßes Gießwerkzeuges;
- Fig. 3: eine Oberflächenstrukturierung in der Gießfläche des Gießwerkzeuges in einer Ansicht gemäß A-A in Figur 2;
- Fig. 4: verschiedene Anordnungen von Elementarzellen zur Bildung einer Oberflächenstrukturierung;
- Fig. 5: eine erste Ausführungsform einer Oberflächenstrukturierung;
- Fig. 6: eine zweite Ausführungsform einer Oberflächenstrukturierung;
- Fig. 7: eine dritte Ausführungsform einer Oberflächenstrukturierung;
- Fig. 8: eine vierte Ausführungsform einer Oberflächenstrukturierung;
- Fig. 9: eine fünfte Ausführungsform einer Oberflächenstrukturierung;
- Fig. 10: eine sechste Ausführungsform einer Oberflächenstrukturierung;
- Fig. 11: eine siebte Ausführungsform der Oberflächenstrukturierung

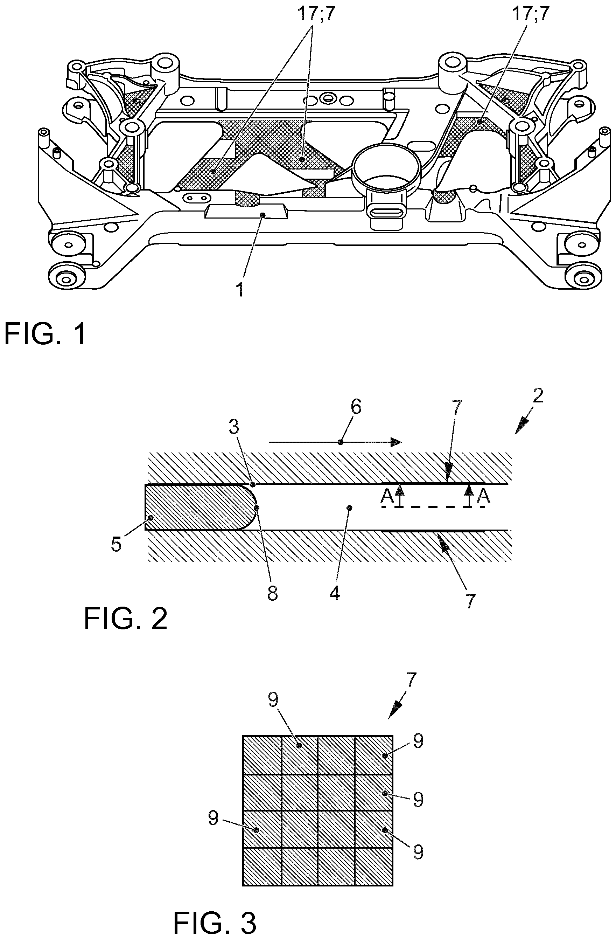

Zur Herstellung eines in Figur 1 abgebildeten und als Fahrwerksteil ausgebildeten Gussteiles 1 aus Aluminium bzw. einer Aluminiumlegierung durch einen Gießprozess ist ein in Figur 2 in einer Prinzipskizze dargestelltes Gießwerkzeug 2 vorgesehen.

Das als Kokille ausgebildete Gießwerkzeug 2 weist eine von Gießflächen 3 begrenzte Kavität 4 auf, in welche im Rahmen des Gießprozesses eine flüssige bzw. fließfähige Metallschmelze 5 aus Aluminium eingefüllt wird, die sich anschließend fortlaufend in einer Fließrichtung 6 in der Kavität 4 bewegt. Die im Wesentlichen glatten Gießflächen 3 weisen zumindest abschnittsweise eine Oberflächenstrukturierung 7 auf. Figur 2 zeigt den Zeitpunkt des Gießprozesses, zu welchem eine Schmelzefront 8 der Metallschmelze 5 den Bereich, in welchem die Oberflächenstrukturierung 7 angeordnet ist, noch nicht erreicht hat.

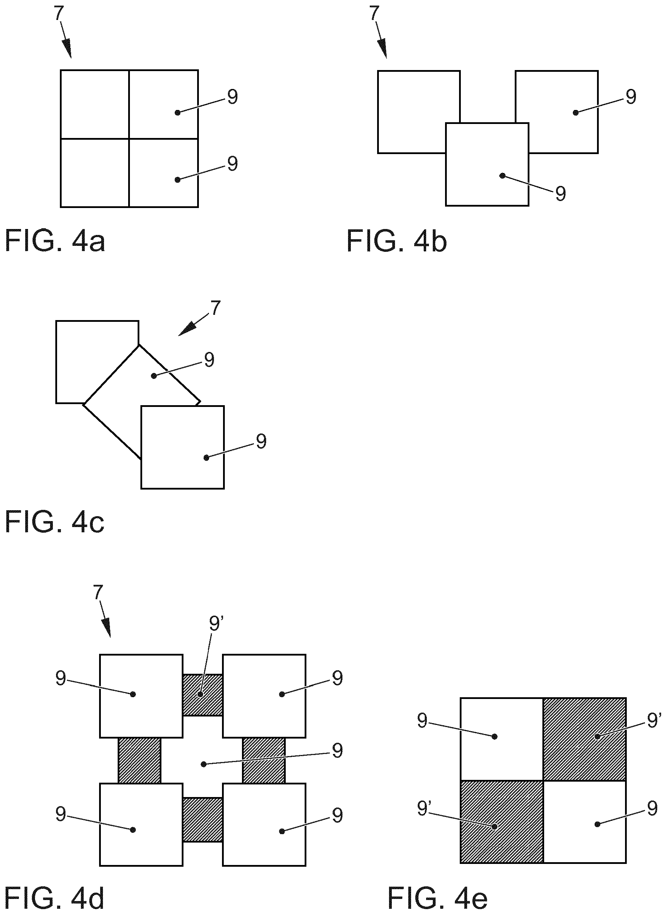

Figur 3 zeigt die in Figur 2 dargestellte Oberflächenstrukturierung 7 in einer Ansicht gemäß Linie A-A in Figur 2. Die Oberflächenstrukturierung 7 besteht aus einer Vielzahl von neben- bzw. untereinander angeordneten und ein Muster bildenden Elementarzellen 9, welche insbesondere quadratisch ausgebildet sind. Die Figuren 4a) bis e) zeigen Beispiele einer möglichen Anordnung der Elementarzellen 9 innerhalb der Oberflächenstrukturierung 7. Zur Bildung der Oberflächenstrukturierung 7 wiederholt sich die Elementarzelle 9 durch Kippen, Verschieben, Drehen oder Spiegeln. Hierbei können sich die Elementarzellen 9 auch zumindest teilweise überlappen. Vorzugsweise sind alle eine Oberflächenstrukturierung 7 bildenden Elementarzellen 9 identisch ausgebildet. Es ist jedoch auch möglich, dass eine Oberflächenstrukturierung 7 durch eine Kombination unterschiedlicher Elementarzellen 9, 9' besteht, welche sich hinsichtlich Größe und/oder Form unterscheiden. Die Kantenlänge der Elementarzellen 9 ist vorzugsweise kleiner als 10 mm.

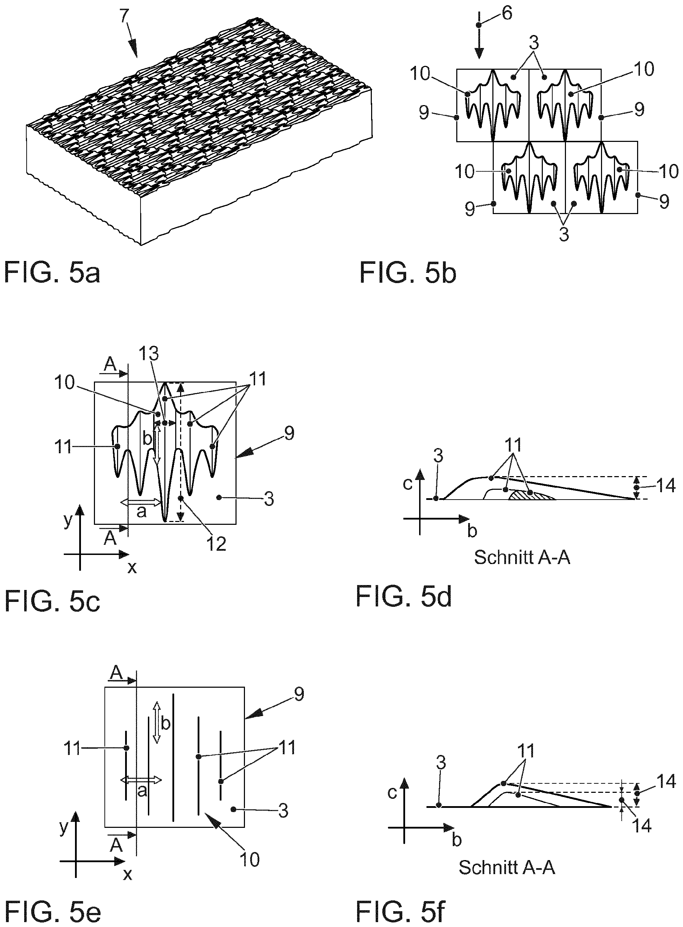

Erfindungsgemäß ist vorgesehen, dass jede der Elementarzellen 9 eine gegenüber einem Grundniveau der Gießfläche 3 vorspringende und/oder zurückversetzte Struktur 10 aufweist, welche innerhalb der jeweiligen Elementarzelle 9 endet. Die Figuren 5 bis 10 zeigen unterschiedliche Ausführungsformen der Oberflächenstrukturierungen 7 in unterschiedlichen Ansichten a) bis f). Die Ansichten 5a) bis 10a) zeigen einen Ausschnitt der jeweiligen Oberflächenstrukturierung 7 in der Gießfläche 3 des Gießwerkzeuges 2 in einer perspektivischen Darstellung. Eine Draufsicht der in den Ansichten 5a) bis 10a) gezeigten Oberflächenstrukturierung 7 und eine Ausrichtung der Strukturen 10 relativ zur Fließrichtung 6 der Metallschmelze 5 wird in den Ansichten 5b) bis 10b) dargestellt.

Die Ansichten 5c) bis 10c) zeigen jeweils eine einzelne von der x-Achse und der y-Achse aufgespannte Elementarzelle 9 mit der jeweiligen Struktur 10. Eine Orientierung der Struktur 10 innerhalb der Elementarzelle 9 und relativ zur Fließrichtung 6 der Metallschmelze 5 ist durch die beiden Hauptrichtungen a und b dargestellt. Eine Schnittansicht gemäß der Linie A-A in den Ansichten 5c) bis 10c) ist in den Ansichten 5d) bis 10d) abgebildet. Die Ansichten 5e) bis 10e) zeigen die technisch vereinfachten Strukturen 10 gemäß den Ansichten 5c) bis 10c) und die Ansichten 5f) bis 10f) die jeweilige Schnittdarstellung gemäß der Linie A-A in den Ansichten 5e) bis 10e).

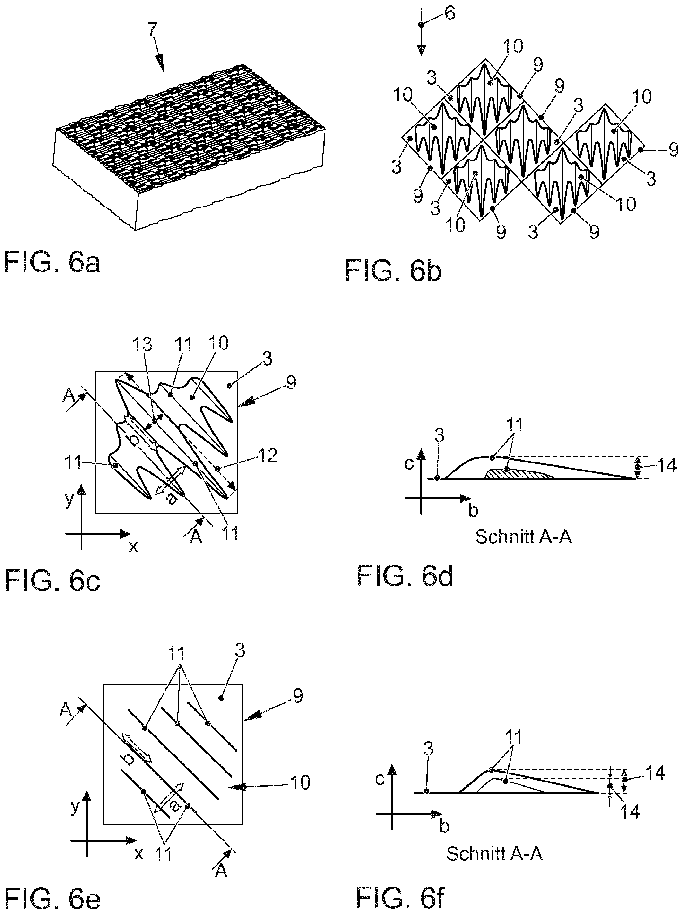

Die in den Figuren 5 und 6 dargestellten Oberflächenstrukturierungen 7 weisen innerhalb einer Elementarzelle 9 jeweils eine gegenüber dem Grundniveau der Gießfläche 3 erhabene Struktur 10 auf, welche aus mehrere Erhebungen 11 besteht und ähnlich einer Schuppe einer Haifischhaut ausgebildet ist. Grundsätzlich kann diese Struktur 10 innerhalb der Elementarzelle 9 auch invers ausgebildet sein und aus mehreren gegenüber dem Grundniveau der Gießfläche 3 zurückversetzten Vertiefungen bestehen. Die dargestellte Struktur 10 innerhalb jeder Elementarzelle 9 besteht aus insgesamt fünf nebeneinander angeordneten und spitz zulaufenden Erhebungen 11, welche sich innerhalb der Elementarzelle 9 in Hauptrichtung b erstrecken. Die Erhebungen 11 weisen, wie der Ansicht 6c) und 6d) zu entnehmen ist, unterschiedliche Längen 12, Breiten 13 und Höhen 14 auf. Bei der Ausführungsform gemäß Figur 5 ist die Hauptrichtung b der Struktur 10 parallel zur y-Achse und bei der Ausführungsform gemäß Figur 6 ist die Struktur 10 in einem Winkel von 45° zur y-Achse ausgerichtet. Die Elementarzellen 9 der beiden Ausführungsformen sind, wie den Ansichten 5b) und 6b) zu entnehmen ist, derart angeordnet, dass sich die Hauptrichtung b der Strukturen 10 innerhalb der Elementarzellen 9 in Fließrichtung 6 der Metallschmelze 5 erstreckt. Hieraus resultierend ergibt sich bei der Ausführungsform gemäß Figur 6 gegenüber der Ausführungsform gemäß Figur 5 ein geringerer Abstand zwischen den einzelnen Strukturen 10 der jeweils benachbarten Elementarzellen 9 und dadurch eine größere Packungsdichte innerhalb der gesamten Oberflächenstrukturierung 7.

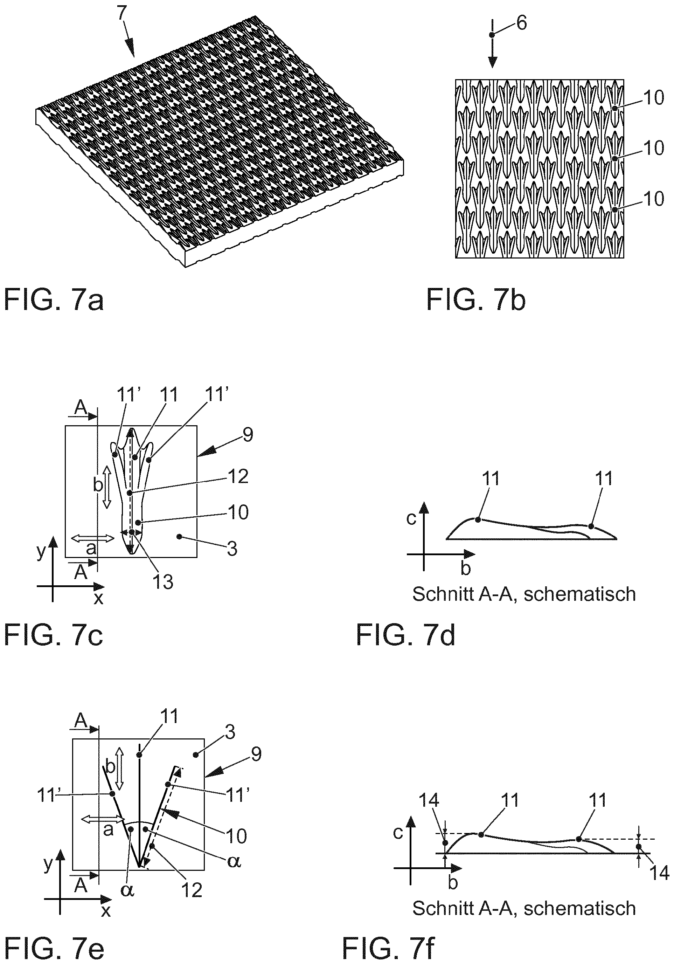

Eine andere Ausführungsform der Oberflächenstrukturierung 7 ist in Figur 7 dargestellt. Die Elementarzellen 9 dieser Oberflächenstrukturierung 7 weisen jeweils eine gegenüber dem Grundniveau der Gießfläche 3 erhabene Struktur 10 auf, welche aus mehreren zusammenhängenden Erhebungen 11 besteht und ähnlich einem Krähenfuß ausgebildet ist. Die Struktur 10 weist eine in Hauptrichtung b ausgerichtete zentrale Erhebung 11 und zwei in einem spitzen Winkel α zu dieser abgewinkelte Erhebungen 11' auf. Die Erhebungen 11, 11' weisen unterschiedliche Längen 12, Breiten 13 und Höhen 14 auf. Die Elementarzellen 9 können auf gleicher Höhe neben- und untereinander angeordnet sein oder, wie in Ansicht 7b) dargestellt, in Fließrichtung 6 der Metallschmelze 5 versetzt zueinander angeordnet sein. Hierdurch wird innerhalb der Oberflächenstrukturierung 7 eine größere Packungsdichte der Strukturen 10 gewährleistet.

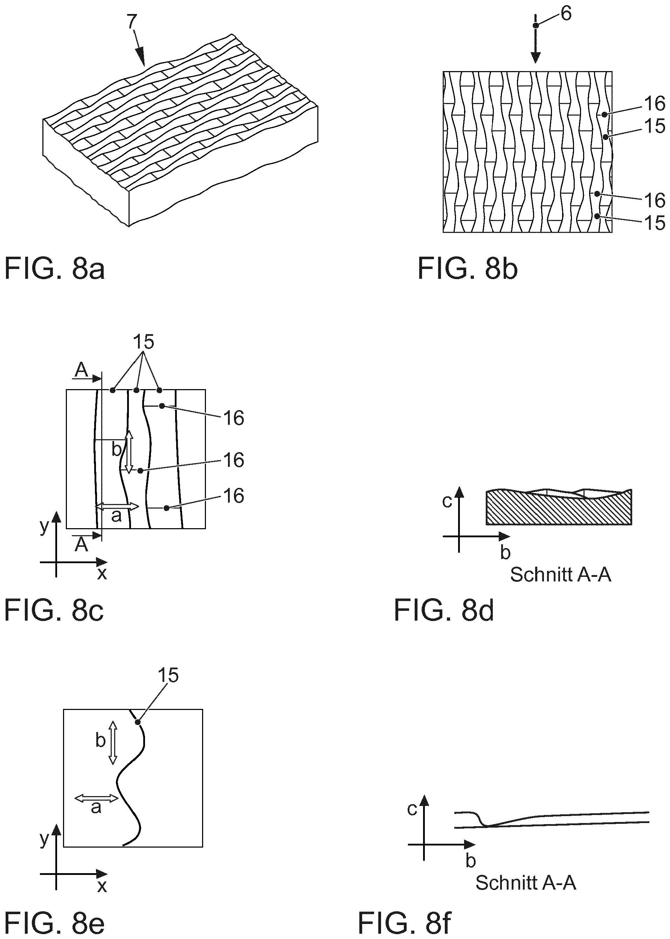

Eine weitere Ausführungsform einer in Fließrichtung 6 ausgerichteten Struktur 10 ist in Figur 8 dargestellt. Hierbei besteht die Struktur 10 aus mehreren in Fließrichtung 6 gerichteten, nebeneinander und teilweise überlappend angeordneten Abdrücken eines Bambusrohres 15. Die Knoten 16 der Bambusrohre 15 sind in Fließrichtung 6 versetzt zueinander angeordnet. Hieraus ergibt sich eine welliger sinusförmiger Verlauf der Struktur 10 (Ansicht 8e)).

Bei den in den Figuren 5 bis 8 beschriebenen Strukturen 10 handelt es sich um gerichtete, sogenannte unidirektionale Strukturen 10, welche bevorzugt in Bereichen mit schneller, stark gerichteter Strömung der Metallschmelze 5 zum Einsatz kommen. Hierbei ist die jeweilige Struktur 10 im Wesentlichen in Strömungsrichtung bzw. Fließrichtung 6 der Metallschmelze 5 ausgerichtet.

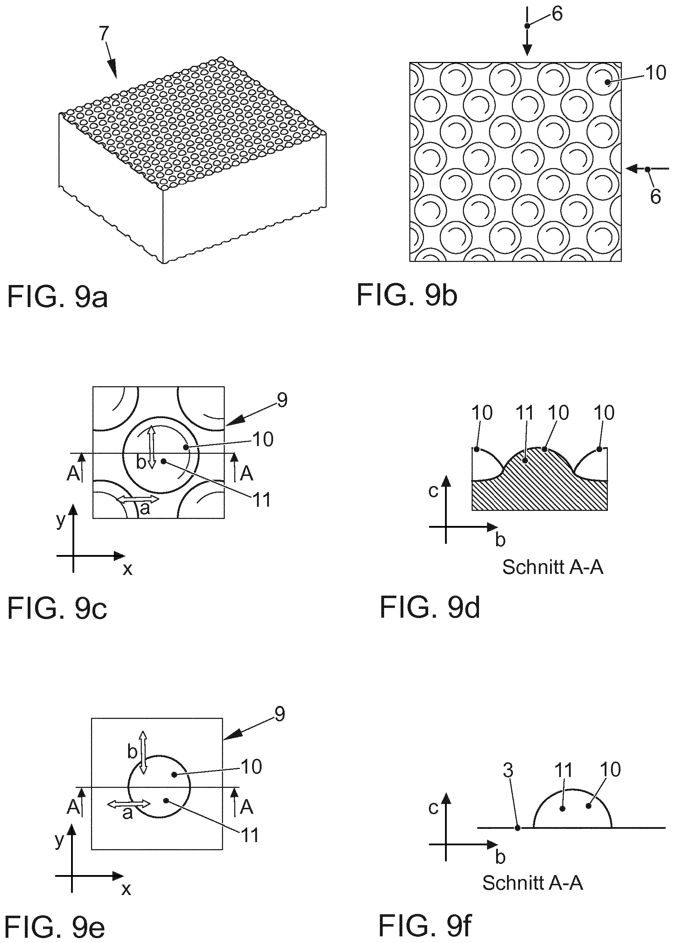

Eine andere Ausführungsform der Oberflächenstrukturierung 7 ist in Figur 9 dargestellt. Hierbei ist die Struktur 10 innerhalb der Elementarzelle 9 als sphärische, insbesondere halbkugelförmige Erhebung 11 ausgebildet. Aufgrund der Symmetrie der Erhebung 11 wird diese Struktur 10 als ungerichtete Struktur 10 bezeichnet, welche unabhängig von der zu erwartenden Fließrichtung 6 der Metallschmelze 5 angeordnet bzw. ausgerichtet sein kann. Eine Oberflächenstrukturierung 7 mit derartigen ungerichteten Strukturen 10 wird insbesondere in langsam durchströmten Bereichen der Kavität 4 mit eher undefinierter Fließrichtung 6 oder bei Fließrichtungswechseln während der Formfüllung eingesetzt.

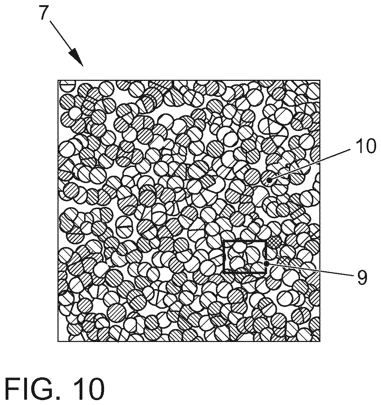

In Figur 10 ist eine weitere Ausführungsform der Oberflächenstrukturierung 7 dargestellt, welche ebenfalls ungerichtete Strukturen 10 aufweist. Die Strukturen 10 sind ebenfalls sphärisch bzw. halbkugelförmig ausgebildet und können als Erhebung oder Vertiefung ausgebildet sein. Dabei können die Erhebungen oder Vertiefungen jeweils unterschiedliche Höhen oder Tiefen aufweisen. Innerhalb einer Elementarzelle 9 kann auch mehr als eine halbkugelförmige Struktur vorliegen. Die Strukturen 10 bilden eine stochastisch und/oder geometrisch definierbare strukturierte Fläche.

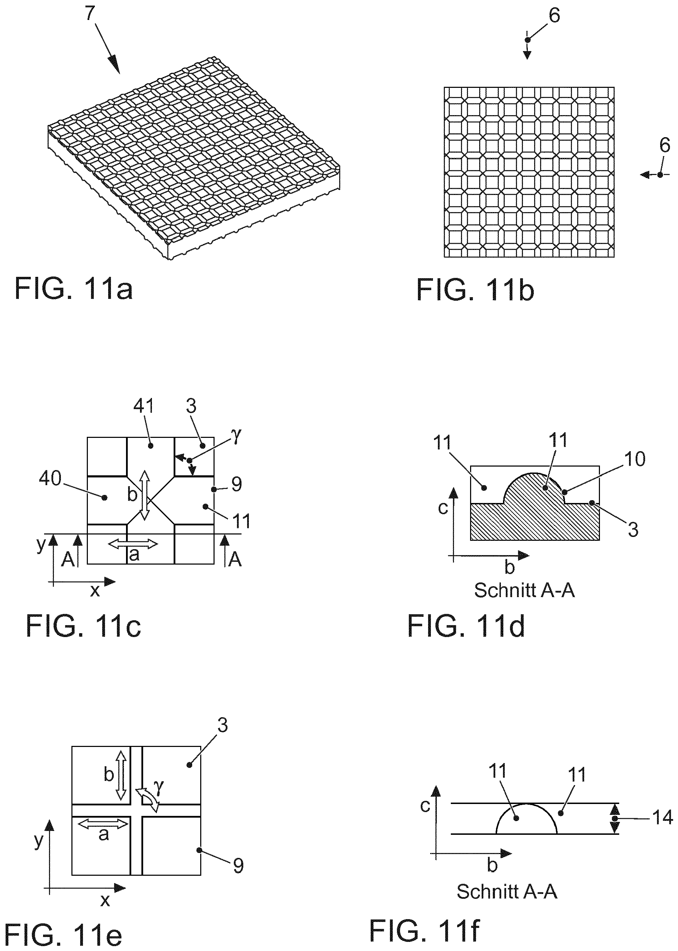

Eine andere Ausführungsform einer Oberflächenstrukturierung 7 mit einer ungerichteten Struktur 10 ist in Figur 11 dargestellt. Die Oberflächenstrukturierung 7 besteht ebenfalls aus mehreren Elementarzellen 9, wobei jede Elementarzelle 9 eine gegenüber der Gießfläche 3 vorspringende Struktur 10 aufweist. Die Strukturen 10 von jeweils benachbarten Elementarzellen 9 sind zusammenhängend ausgebildet und bilden ein Muster aus orthogonalen Erhebungen 11, welche einen Winkel γ von 90° einschließen (Ansicht 10e)). Hierbei beträgt ein Verhältnis zwischen der Gießfläche 3 und der vorspringenden Strukturfläche innerhalb einer Elementarzelle 9 weniger als 2:1. Die Erhebungen 11 weisen, wie in den Ansichten 10d) und 10f) zu erkennen ist, einen halbkreisförmigen Querschnitt auf. Eine Höhe 14 der Erhebungen 11 entspricht in etwa dem halben Abstand zwischen zwei parallelen Erhebungen 11 in jeweils benachbarten Elementarzellen 9. Die orthogonal angeordneten Erhebungen 11 des Musters der Oberflächenstrukturierung 7 weisen eine konstante Höhe 14 auf.

Wie in Figur 1 zu erkennen ist, weist das in dem erfindungsgemäßen Gießwerkzeug 2 hergestellte Gussteil 1 eine Negativform 17 der Oberflächenstrukturierung 7 des Gießwerkzeuges 2 auf. Das Gussteil 1 bzw. das Gießwerkzeug 2 kann je nach Gussteilgeometrie und vorherrschenden Fließrichtungen 6 und Fließgeschwindigkeiten der Metallschmelze 5 während des Gießprozesses mehrere nicht miteinander verbundene Oberflächenstrukturierungen 7 aufweisen.

Zusammenfassend ergeben sich durch die erfindungsgemäße Oberflächenstrukturierung 7 in dem Gießwerkzeug 2 diverse vorteilhafte Effekte, welche dazu führen, dass die Fließlänge der Metallschmelze 5 in dem Gießwerkzeug 2 während des Gießprozesses verlängert wird. Hierdurch lassen sich Gussteile 1 mit Wandstärken unter 5 mm herstellen.

Durch die Strukturen 10 in den Elementarzellen 9 entsteht durch lokal aufgebaute Luft-Wirbel-Zonen ein sogenannter Luftpolster-Effekt, wobei die Luftpolster zwischen der Metallschmelze 5 und dem Gießwerkzeug 2 als Isolator für den thermischen und tribologischen Übergang wirken. Hierdurch können die Fließlänge und die Fließgeschwindigkeit der Metallschmelze 5 gezielt gesteuert werden.

Weiterhin entsteht durch die Struktur 10 der sogenannte Radiator-Effekt, bei welchem durch lokale Kühlungseffekte die Kühlungsgeschwindigkeit und die Kühlungsrichtung gezielt beeinflusst werden und welcher zu einer gezielten Reduzierung und zu einem gezielten Aufreißen der sich während des Gießprozesses auf der Metallschmelze 5 bildenden Oxidhaut führt.

Durch das Design der Struktur 10 und die Anordnung der Elementarzellen 9 innerhalb der Oberflächenstrukturierung 7 werden die Fließrichtung 6 und die Fließgeschwindigkeit sowie die Erstarrungsgeschwindigkeit der Metallschmelze 5 gezielt gesteuert. Außerdem sorgt der durch die Strukturen 10 gebildete Rauheitsgrad der Oberfläche des Gießwerkzeuges 2 für ein konstantes Aufreißen der Oxidhaut der Metallschmelze 5 und dadurch für eine Fließwegverlängerung der Metallschmelze 5 innerhalb der Kavität 4.

### Bezugszeichenliste

- 1: Gussteil
- 2: Gießwerkzeug
- 3: Gießfläche
- 4: Kavität
- 5: Metallschmelze
- 6: Fließrichtung
- 7: Oberflächenstrukturierung
- 8: Schmelzefront
- 9: Elementarzelle
- 10: Struktur
- 11: Erhebung
- 12: Längen
- 13: Breiten
- 14: Höhen
- 15: Bambusrohr
- 16: Knoten
- 17: Negativform

## Patentansprüche

1. Ein als Kokille ausgebildetes Gießwerkzeug (2) mit zumindest einer Kavität (4) zur Herstellung zumindest eines Gussteiles (1), bei welchem eine die Kavität (4) begrenzende Gießfläche (3) des Gießwerkzeuges (2) zumindest abschnittsweise eine Oberflächenstrukturierung (7) aufweist, welche aus mehreren Elementarzellen (9) besteht, wobei jede Elementarzelle (9) eine gegenüber der Gießfläche (3) vorspringende und/oder zurückversetzte Struktur (10) aufweist, die innerhalb der jeweiligen Elementarzelle (9) endet und
• die Elementarzellen (9) der Oberflächenstrukturierung (7) ein Muster mit identisch ausgebildeten Strukturen (10) bilden und
• alle Elementarzellen (9) der Oberflächenstrukturierung (7) die gleiche Größe und/oder Form aufweisen und
• an Stellen des Gießwerkzeuges (2) mit zu erwartender stark gerichteter Strömung einer Metallschmelze (5) richtungsgebundene Strukturen (10) ausgeführt sind und hierbei die gerichtete Struktur (10) zumindest eine Erhebung (11) und/oder Vertiefung aufweist, welche sich in Fließrichtung (6) einer Metallschmelze (5) in der Kavität (4) erstreckt und
• in Bereichen zu erwartender undefinierter Strömung der Metallschmelze (5) ungerichtete Strukturen (10) ausgeführt sind und hierbei die ungerichtete Struktur (10)
o sphärisch ausgebildet ist.

2. Gießwerkzeug (2) nach Anspruch 1, **dadurch gekennzeichnet, dass** sich zwei oder mehrere Elementarzellen (9) der Oberflächenstrukturierung (7) zumindest teilweise überlappen.

3. Gießwerkzeug (2) nach Anspruch 1, **dadurch gekennzeichnet, dass** die zumindest eine Erhebung (11) und/oder Vertiefung unterschiedliche Breiten (13) und/oder unterschiedliche Höhen (14) oder Tiefen aufweist.

4. Gießwerkzeug (2) nach zumindest einem der vorangehenden Ansprüche, **dadurch gekennzeichnet, dass** die Struktur (10) aus zwei oder mehreren Erhebungen (11) und/oder Vertiefungen besteht,
• welche nicht miteinander verbunden sind oder
• welche eine zusammenhängende Struktur (10) bilden.

5. Gießwerkzeug (2) nach Anspruch 4, **dadurch gekennzeichnet, dass** die Erhebungen (11) und/oder Vertiefungen der Struktur (10) parallel zueinander angeordnet sind.

6. Gießwerkzeug (2) nach Anspruch 4, **dadurch gekennzeichnet, dass** die Struktur (10) zwei oder mehrere zusammenhängende Erhebungen (11) und/oder Vertiefungen aufweist, welche einen spitzen Winkel (α) zwischen sich einschließen.

7. Gießwerkzeug (2) nach Anspruch 4, **dadurch gekennzeichnet, dass** die zumindest zwei oder mehreren Erhebungen (11) und/oder Vertiefungen einer Struktur (10) unterschiedliche Längen (12) und/oder unterschiedliche Breiten (13) und/oder unterschiedliche Höhen (14) und/oder unterschiedliche Tiefen aufweisen.

8. Ein als Kokille ausgebildetes Gießwerkzeug (2) mit zumindest einer Kavität (4) zur Herstellung zumindest eines Gussteiles (1), bei welchem eine die Kavität (4) begrenzende Gießfläche (3) des Gießwerkzeuges (2) zumindest abschnittsweise eine Oberflächenstrukturierung (7) aufweist, welche aus mehreren Elementarzellen (9) besteht, wobei jede Elementarzelle (9) eine gegenüber der Gießfläche (3) vorspringende oder zurückversetzte Struktur (10) aufweist, wobei die Strukturen (10) in jeweils benachbarten Elementarzellen (9) zusammenhängend ausgebildet sind und ein Muster aus orthogonalen Erhebungen (11) oder Vertiefungen bilden, wobei ein Verhältnis zwischen der Gießfläche (3) und einer vorspringenden oder zurückversetzten Strukturfläche innerhalb einer Elementarzelle (9) weniger als 2:1 beträgt und
• in Bereichen des Gießwerkzeuges (2) mit zu erwartender stark gerichteter Strömung einer Metallschmelze (5) richtungsgebundene Strukturen (10) ausgeführt sind und
• in Bereichen zu erwartender undefinierter Strömung der Metallschmelze (5) ungerichtete Strukturen (10) ausgeführt sind.

9. Gießwerkzeug (2) nach Anspruch 8, **dadurch gekennzeichnet, dass** die Struktur (10) aus Erhebungen (11) oder Vertiefungen besteht, wobei eine Höhe (14) und/oder Tiefe der Erhebungen (11) oder Vertiefungen dem halben Abstand zwischen zwei parallelen Erhebungen (11) und/oder parallelen Vertiefungen in benachbarten Elementarzellen (9) entspricht.

10. Gießwerkzeug (2) nach Anspruch 8 oder 9, **dadurch gekennzeichnet, dass** die Erhebungen (11) oder Vertiefungen einen halbkreisförmigen oder v-förmigen Querschnitt aufweisen.

11. Gießwerkzeug (2) nach zumindest einem der Ansprüche 8 bis 10, **dadurch gekennzeichnet, dass** die orthogonalen Erhebungen (11) oder Vertiefungen des Musters der Oberflächenstrukturierung (7) eine konstante Höhe (14) oder Tiefe aufweisen.

12. Gießwerkzeug (2) nach zumindest einem der vorangehenden Ansprüche, **dadurch gekennzeichnet, dass** die Oberflächenstrukturierung (7) durch ein spanendes Fertigungsverfahren hergestellt ist.

13. Gießwerkzeug (2) nach zumindest einem der vorangehenden Ansprüche, **dadurch gekennzeichnet, dass** in der Gießfläche (3) des Gießwerkzeuges (2) zumindest zwei Oberflächenstrukturierungen (7) angeordnet sind, welche das gleiche Muster oder voneinander abweichende Muster aufweisen.

## Claims

1. A casting mold (2) designed as a permanent mold with at least one cavity (4) for producing at least one cast article (1), with which at least some sections of a casting face (3) of the casting mold (2) delimiting the cavity (4) have a surface structured portion (7), which consists of a plurality of unit cells (9), wherein each unit cell (9) has a structure (10) that projects and/or is recessed relative to the casting face (3) and ends within the respective unit cell (9), and
• the unit cells (9) of the surface structured portion (7) form a pattern with identically formed structures (10), and
• all the unit cells (9) of the surface structured portion (7) have the same size and/or shape, and
• directional structures (10) are formed at locations of the casting mold (2) with an expected strongly directed flow of a metal melt (5), and in this case the directed structure (10) has at least one elevation (11) and/or depression extending in the flow direction (6) of a metal melt (5) in the cavity (4), and
• non-directional structures (10) are formed in regions of expected undefined flow of the metal melt (5), and in this case the non-directional structure (10)
∘ is spherical.

2. The casting mold (2) according to claim 1, **characterized in that** two or more unit cells (9) of the surface structured portion (7) at least partially overlap.

3. The casting mold (2) according to claim 1, **characterized in that** the at least one elevation (11) and/or depression has different widths (13) and/or different heights (14) or depths.

4. The casting mold (2) according to at least one of the preceding claims, **characterized in that** the structure (10) consists of two or more elevations (11) and/or depressions,
• which are not connected to each other or
• which form a contiguous structure (10).

5. The casting mold (2) according to claim 4, **characterized in that** the elevations (11) and/or depressions of the structure (10) are arranged parallel to one another.

6. The casting mold (2) according to claim 4, **characterized in that** the structure (10) has two or more contiguous elevations (11) and/or depressions that enclose an acute angle (a) between them.

7. The casting mold (2) according to claim 4, **characterized in that** the at least two or more elevations (11) and/or depressions of a structure (10) have different lengths (12) and/or different widths (13) and/or different heights (14) and/or different depths.

8. A casting mold (2) designed as a permanent mold with at least one cavity (4) for producing at least one cast article (1), with which at least some sections of a casting face (3) of the casting mold (2) delimiting the cavity (4) have a surface structured portion (7), which consists of a plurality of unit cells (9), wherein each unit cell (9) has a structure (10) that projects or is recessed relative to the casting face (3), wherein the structures (10) are formed contiguously in respectively adjacent unit cells (9) and form a pattern of orthogonal elevations (11) or depressions, wherein a ratio between the casting face (3) and a projecting or recessed structural surface within one unit cell (9) is less than 2:1, and
• directional structures (10) are formed in regions of the casting mold (2) with an expected strongly directed flow of a metal melt (5), and
• non-directional structures (10) are formed in regions of expected undefined flow of the metal melt (5).

9. The casting mold (2) according to claim 8, **characterized in that** the structure (10) consists of elevations (11) or depressions, wherein a height (14) and/or depth of the elevations (11) or depressions corresponds to half the distance between two parallel elevations (11) and/or parallel depressions in adjacent unit cells (9).

10. The casting mold (2) according to claim 8 or 9, **characterized in that** the elevations (11) or depressions have a semicircular or v-shaped cross-section.

11. The casting mold (2) according to at least one of claims 8 to 10, **characterized in that** the orthogonal elevations (11) or depressions of the pattern of the surface structured portion (7) have a constant height (14) or depth.

12. The casting mold (2) according to at least one of the preceding claims, **characterized in that** the surface structured portion (7) is produced by a machining manufacturing method.

13. The casting mold (2) according to at least one of the preceding claims, **characterized in that** at least two surface structured portions (7) are arranged in the casting face (3) of the casting mold (2), said surface structured portions having the same pattern or patterns differing from one another.

## Revendications

1. Outil de coulée (2) en forme de coquille comprenant au moins une cavité (4) pour la production d'une pièce moulée (1), dans lequel une surface de coulée (3) de l'outil de coulée (2) limitant la cavité (4) présente au moins par sections une structure de surface (7), laquelle se compose de plusieurs cellules élémentaires (9), chaque cellule élémentaire (9) présentant une structure (10) faisant saillie et/ou étant en retrait par rapport à la surface de coulée (3), laquelle se termine à l'intérieur de la cellule élémentaire (9) respective et
• les cellules élémentaires (9) de la structure de surface (7) formant un motif comprenant des structures (10) de forme identique et
• toutes les cellules élémentaires (9) de la structure de surface (7) présentant la même taille et/ou forme et
• des structures (10) directionnelles étant réalisées à des points de l'outil de coulée (2) ayant un flux fortement directionnel attendu de métal en fusion (5) et, dans ce cas, la structure (10) directionnelle présentant au moins une élévation (11) et/ou une dépression, laquelle s'étend dans la cavité (4) dans la direction de flux (6) d'un métal en fusion (5) et
• des structures (10) non directionnelles étant réalisées dans des zones de flux indéfini attendu de métal en fusion (5) et, dans ce cas, la structure (10) non directionnelle
∘ étant de forme sphérique.

2. Outil de coulée (2) selon la revendication 1, **caractérisé en ce que** deux ou plusieurs cellules élémentaires (9) de la structure de surface (7) se superposent au moins partiellement.

3. Outil de coulée (2) selon la revendication 1, **caractérisé en ce que** l'au moins une élévation (11) et/ou dépression présentent des largeurs (13) différentes et/ou des hauteurs (14) ou des profondeurs différentes.

4. Outil de coulée (2) selon l'une quelconque des revendications précédentes, **caractérisé en ce que** la structure (10) se compose de deux ou plusieurs élévations (11) et/ou dépressions,
• lesquelles ne sont pas connectées les unes aux autres ou
• lesquelles forment une structure (10) cohérente.

5. Outil de coulée (2) selon la revendication 4, **caractérisé en ce que** les élévations (11) et/ou les dépressions de la structure (10) sont disposées parallèles les unes aux autres.

6. Outil de coulée (2) selon la revendication 4, **caractérisé en ce que** la structure (10) présente deux ou plusieurs élévations (11) et/ou dépressions connexes, lesquelles forment un angle aigu (a) entre elles.

7. Outil de coulée (2) selon la revendication 4, **caractérisé en ce que** les au moins deux ou plusieurs élévations (11) et/ou dépressions d'une structure (10) présentent des longueurs (12) différentes et/ou des largeurs (13) différentes et/ou des hauteurs (14) différentes et/ou des profondeurs différentes.

8. Outil de coulée (2) en forme de coquille comprenant au moins une cavité (4) pour la production d'une pièce moulée (1), dans lequel une surface de coulée (3) de l'outil de coulée (2) limitant la cavité (4) présente au moins par sections une structure de surface (7), laquelle se compose de plusieurs cellules élémentaires (9), chaque cellule élémentaire (9) présentant une structure (10) faisant saillie et/ou étant en retrait par rapport à la surface de coulée (3), les structures (10) dans chaque cellule élémentaire (9) adjacente étant réalisées cohérentes et formant un motif d'élévations (11) ou de dépressions orthogonales, un rapport entre la surface de coulée (3) et une surface de structure en saillie ou en retrait à l'intérieur d'une cellule élémentaire (9) étant inférieur à 2:1 et
• des structures (10) directionnelles étant réalisées dans des zones de l'outil de coulée (2) ayant un flux fortement directionnel attendu de métal en fusion (5) et
• des structures (10) non directionnelles étant réalisées dans des zones de flux indéfini attendu de métal en fusion (5).

9. Outil de coulée (2) selon la revendication 8, **caractérisé en ce que** la structure (10) se compose d'élévations (11) et de dépressions, la hauteur (14) et/ou la profondeur des élévations (11) ou dépressions correspondant à la moitié de la distance entre deux élévations (11) parallèles et/ou dépressions parallèles dans des cellules élémentaires (9) adjacentes.

10. Outil de coulée (2) selon la revendication 8 ou 9, **caractérisé en ce que** les élévations (11) ou dépressions présentent une coupe transversale semi-circulaire ou en forme de V.

11. Outil de coulée (2) selon au moins l'une des revendications 8 à 10, **caractérisé en ce que** les élévations (11) ou dépressions orthogonales du motif de la structure de surface (7) présentent une hauteur (14) ou profondeur constante.

12. Outil de coulée (2) selon au moins l'une des revendications précédentes, **caractérisé en ce que** la structure de surface (7) est fabriquée par un procédé de fabrication par enlèvement de copeaux.

13. Outil de coulée (2) selon au moins l'une des revendications précédentes, **caractérisé en ce qu'au** moins deux structures de surface (7) sont disposées dans la surface de coulée (3) de l'outil de coulée (2), lesquelles présentent le même motif ou des motifs différents l'un de l'autre.
